**Europäisches Patentamt**

**European Patent Office**

**Office européen des brevets**

(11) Numéro de publication : **0 317 409 B1**

(12) **FASCICULE DE BREVET EUROPEEN**

(19)

(45) Date de publication du fascicule du brevet :
**22.04.92 Bulletin 92/17**

(21) Numéro de dépôt : **88402842.4**

(22) Date de dépôt : **14.11.88**

(51) Int. Cl.⁵ : **C03B 23/025,** C03B 29/04

(54) **Procédé et dispositif pour le bombage thermique du verre.**

(30) Priorité : **20.11.87 FR 8716083**

(43) Date de publication de la demande :
**24.05.89 Bulletin 89/21**

(45) Mention de la délivrance du brevet :
**22.04.92 Bulletin 92/17**

(84) Etats contractants désignés :
**BE CH DE ES FR GB IT LI LU NL SE**

(56) Documents cités :
**US-A- 3 248 517**

(73) Titulaire : **SAINT-GOBAIN VITRAGE INTERNATIONAL**
**18, avenue d'Alsace**
**F-92400 Courbevoie (FR)**

(72) Inventeur : **Lecourt, Jean**
**32, rue Jouvenet**
**F-75016 Paris (FR)**
Inventeur : **Legros, Désiré**
**19, Chemin de Velaine**
**B-5790 Jemeppe/Sambre (BE)**
Inventeur : **Granville, André**
**243 b, rue de Falisolle**
**B-5700 Auvelais (BE)**

(74) Mandataire : **de Toytot, Robert et al**
**SAINT-GOBAIN RECHERCHE 39 quai Lucien**
**Lefranc B.P. 135**
**F-93304 Aubervilliers Cédex (FR)**

## Description

L'invention concerne les techniques de chauffage et de bombage de feuilles de verre par gravité, en particulier pour la fabrication de vitrages feuilletés automobiles.

Pour galber simultanément des feuilles de verre destinées à être assemblées puis collées à l'aide d'un film plastique, constituant ainsi un vitrage de sécurité feuilleté, on utilise couramment le bombage thermique par gravité. Le même procédé a également été employé pour former des feuilles de verre unitaires destinées à être associées à une ou plusieurs feuilles de matière plastique. De même, un procédé identique a été utilisé pour former des feuilles de verre unitaires destinées à subir un traitement de trempe thermique.

Au cours du procédé de bombage par gravité, la ou les feuilles de verre planes, découpées à la forme voulue sont placées à plat sur un chariot constitué d'un matériau supportant sans déformation des températures élevées par exemple en acier inoxydable. Ce chariot se déplace de manière discontinue dans les cellules successives d'un four-tunnel, il avance pas à pas d'une cellule à l'autre en séjournant dans chaque cellule pendant une durée définie : la période du cycle. Au cours du temps, la température de la feuille de verre s'élève progressivement jusqu'à atteindre puis dépasser la température de transformation. Le verre se déforme alors sous l'action de son propre poids et il se rapproche d'une forme métallique rigide dont il épouse le contour. Cette forme, appelée squelette peut éventuellement être articulée de manière à faciliter la déformation du verre ou même comporter des dispositifs qui participent activement à cette déformation comme décrit par exemple dans la demande de brevet européen numéro EP-A- 0 250 311, publiée le 23.12.87 et ainsi appartenant à l'état de la technique visé à l'article 54, paragraphe 3.

Pour diminuer la masse inerte qu'il est nécessaire de chauffer en même temps que les feuilles de verre, on a cherché à alléger les masses des chariots à chauffer. Une technique connue consiste à disposer de chariots en deux parties, une partie inférieure équipée de roues, destinée à rester en permanence en dehors du four et une partie supérieure qui supporte le verre et est chauffée avec lui. Le brevet français FR-A-1 344 766 décrit un tel chariot en deux parties, la structure supérieure à laquelle le squelette est intégré qui est située dans la zone chauffée du four et deux éléments verticaux longitudinaux équipés de roulettes qui portent la structure supérieure en traversant deux fentes longitudinales prévues dans la sole du four. Cette disposition qui limite la capacité calorifique de la partie mobile dans la zone chauffée du four n'empêche cependant pas la circulation de l'air au travers des fentes longitudinales et d'autre part, la sole qui est fixe rend très délicate l'évacuation des fragments de verre cassé qui peuvent s'y déposer.

Le four traditionnel dans lequel se déplacent les chariots supportant les feuilles de verre comporte deux types de cellules où ils séjournent successivement, chaque cellule disposant d'une régulation thermique propre. Ce sont, dans l'ordre : des cellules de préchauffage dans lesquelles le verre s'échauffe le plus rapidement possible puis des cellules de bombage où la température du verre doit être ajustée finement dans les différentes zones de la feuille de verre pour lui permettre d'atteindre la forme exacte souhaitée. Au cours de cette phase de bombage, on approche du verre des éléments chauffants communément appelés "chandelles" à des distances variables. On peut ainsi en choisissant des distances différentes, chauffer différemment les différentes zones de la feuille de verre. Ce dispositif permet, non seulement d'obtenir des rayons de courbure variés comme sur un pare-brise par exemple, mais également, en changeant les distances entre les chandelles et le verre, d'un chariot au suivant, d'obtenir successivement le bombage de formes différentes. La grande souplesse de ce procédé permet donc par des moyens simples, de produire successivement sur la même installation des modèles différents. Une condition nécessaire doit cependant être impérativement remplie : la température globale de la feuille de verre lorsqu'elle entre dans la première zone de bombage doit être convenable pour la suite du processus : si elle est trop faible, l'énergie apportée localement au cours du bombage sera insuffisante pour obtenir les rayons de courbure souhaités ou bien si elle est trop forte, même en maintenant les chandelles dans leur position la plus éloignée, il sera impossible de limiter l'affaissement du verre.

On voit donc qu'un problème délicat est celui de l'obtention de la température adéquate pour la feuille de verre à la sortie de la zone de préchauffage. Dans le cas où les feuilles de verre traitées successivement sont identiques, le moyen habituellement retenu pour obtenir la bonne température à la fin du préchauffage consiste à utiliser un four dont les cellules sont équipées au moins partiellement de parois en matériaux réfractaires lourds qui possèdent donc une capacité calorifique élevée et dont la température reste -de ce fait- remarquablement stable ; comme le temps de séjour de chaque chariot dans une cellule est toujours le même (c'est la période du cycle), dans la mesure où les quantités de chaleur à fournir à chaque équipage mobile sont du même ordre, la température atteinte, à la fin du cycle, à la sortie de la cellule, sera la même.

Mais lorsqu'on désire fabriquer sur le même four des vitrages différents, les besoins calorifiques de chaque équipage mobile peuvent être également différents. C'est ainsi par exemple que certains pare-brise feuilletés peuvent être composés d'un verre de 2 mm d'épaisseur associé à un autre de 1,5 mm tandis que d'autres pare-brise seront constitués de deux feuilles identiques de 2,5 mm d'épaisseur. Les surfaces des différents modèles étant elles-mêmes très différentes, on constate que, de fait, la masse du pare-brise à fabriquer peut varier de 10 kg à 25 kg. Si les séries de fabrication du même type de pare-brise sont longues, le four est stabilisé et l'on peut choisir les conditions thermiques adaptées à chaque type de vitrage. Néanmoins, pour les voitures de petite série ou lorsque la demande est très diversifiée comme sur le marché des produits de remplacement, on peut désirer alterner les productions de modèles différents. De même, pour des raisons de production, on peut souhaiter modifier instantanément le programme de fabrication en introduisant ou en supprimant au dernier moment un pare-brise donné dans la série programmée. Il faudrait alors pouvoir adapter instantanément les conditions du four aux différents produits. Il est impossible de modifier la durée du cycle car un changement de cycle affecterait simultanément tous les chariots présents dans le four qui sont par hypothèse différents.

Les solutions habituellement proposées pour la régulation des fours de chauffage de feuilles de verre sont généralement prévues pour des fours où les feuilles de verre qui se succèdent sont identiques, on peut ainsi par exemple modifier les cadences en passant d'une série à une autre, ou bien modifier la température de consigne ou la puissance fournie à chaque cellule au moment où une nouvelle série arrive dans la cellule correspondante, il est même possible comme décrit par exemple dans le brevet européen EP-A- 00 47 682 pour un four de type différent, d'anticiper ces changements pour diminuer le temps de réaction du four.

Il en va différemment si l'on veut fabriquer des vitrages de types différents sans se préoccuper de l'ordre dans lequel ils se succèdent. Alors les procédés de régulation précédemment proposés ont des temps de réaction trop long pour accepter des variations importantes et aléatoires de la masse des feuilles de verre qui se suivent dans le four. En particulier, avec les fours dont les cellules ont des parois qui sont constituées partiellement ou totalement de briques réfractaires, la température ne peut s'adapter rapidement et, si un pare-brise léger succède à un plus lourd, le second sera systématiquement trop chaud et inversement dans le cas contraire.

L'invention propose une solution à ce problème, elle consiste à utiliser un dispositif pour le bombage thermique de feuilles de verre par gravité qui comporte un équipage mobile supportant le verre qui le transporte dans un four, d'une cellule à une autre, le four comportant au moins une cellule de préchauffage et au moins une cellule de bombage et où, le chauffage est assuré par des résistances électriques, il est caractérisé en ce que la capacité calorifique des masses mobiles dans le four est supérieure à la somme des capacités calorifiques des matériaux constituant les parois internes de chaque cellule, le calcul étant effectué pour une épaisseur en millimètres "e" telle que :

$$e = \frac{10}{\sqrt{\lambda c}}$$

où $\lambda$ est la conductivité thermique en W/m.K
et c est la chaleur massique en Wh/kg.K

Concrètement, ce but peut être atteint en limitant ou même en éliminant toute masse réfractaire telle que brique ou ciment, des parois des cellules.

D'une manière complémentaire l'invention propose de réguler l'apport de chaleur dans l'enceinte du four en maintenant constante la température des résistances appliquées sur les parois des cellules.

Pour raccourcir le temps de chauffage et faciliter la régulation, il importe de limiter au maximum la capacité calorifique de l'équipage mobile circulant dans le four. On atteint ce résultat en laissant à l'extérieur de celui-ci la partie du chariot qui assure son transport et comprend ses moyens de roulement.

Le fait d'avoir limité l'inertie thermique des cellules du four les rend particulièrement vulnérables aux effets thermiques parasites comme la circulation d'air froid. L'invention prévoit donc des sas entre d'une part les parties chaudes du four et d'autre part, les parties froides : c'est-à-dire l'extérieur du four en amont et la cellule plus froide qui fait suite aux cellules de bombage en aval.

Dans une forme de réalisation de l'invention, la partie froide du chariot qui comporte ses moyens de roulement se trouve en-dessous du four et est reliée au berceau portant le verre par des moyens de liaison passant au travers de la sole selon une fente longitudinale.

Il est prévu que ce soit un élément du chariot lui-même qui fasse étanchéité entre l'intérieur et l'extérieur du four en obturant la fente. De plus, il est prévu que la sole du four soit mobile dans chacune de ses parties situées de part et d'autre de la fente.

Dans une autre variante de l'invention pour limiter au maximum l'espace intérieur du four, on a prévu une sole en deux parties situées de part et d'autre de la fente qui aient leurs faces internes inclinées pour que les parois latérales du four soient les moins hautes possibles.

L'invention est exposée de façon plus détaillée dans la suite de la description qui fait référence aux planches de dessins dans lesquelles :

— la figure 1 représente en vue de dessus de façon schématique les différentes cellules composant un four de bombage traditionnel,

– la figure 2a montre en perspective un vitrage bombé placé sur son squelette. Dans la figure 2b, cet ensemble est posé sur le chariot qui circule dans le four conventionnel,

– la figure 3 représente la répartition des cellules dans un four selon l'invention présenté dans une vue de dessus.

– sur les figures 4 et 5, on a représenté un chariot selon l'invention d'abord seul, dans une vue en perspective, puis chargé de son squelette portant un vitrage bombé.

– la figure 6 montre un détail de la figure 5.

– la figure 7 montre une cellule d'un four selon l'invention où le chariot portant le vitrage est également représenté.

– sur la figure 8, enfin, on a représenté la même cellule avec la sole en position ouverte.

Bien que l'exemple retenu présente un four selon l'invention qui comporte trois cellules de préchauffage et deux cellules de bombage, cet exemple n'est pas limitatif et l'invention concerne des fours où le nombre de cellules, aussi bien pour le préchauffage que pour le bombage, est quelconque.

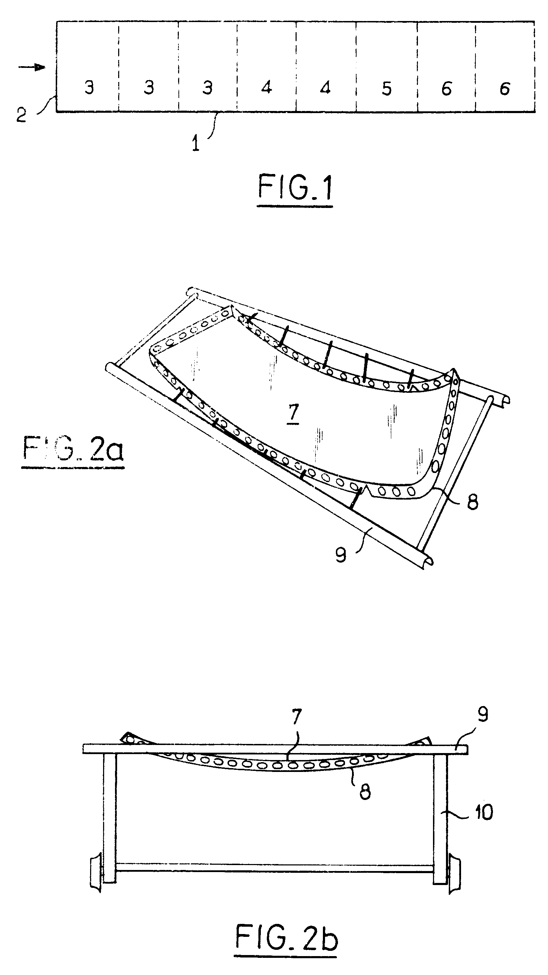

La figure 1 présente la répartition des cellules dans un four traditionnel pour le chauffage et le bombage de deux feuilles de verre destinées à être assemblées ultérieurement à l'aide d'une feuille de matière thermoplastique pour former un pare-brise feuilleté. Le four (1) comporte trois zones de préchauffage (3), deux zones de bombage (4) une zone de soufflage (5). Le rôle de la cellule de soufflage (5) est de permettre de créer -si on le souhaite- à la périphérie du pare-brise une zone où existe une légère précontrainte, celle-ci donne plus de solidité au vitrage recuit une fois terminé. Elle permet de limiter les casses par choc mécanique ou par contrainte thermique. Le four comporte également deux zones de refroidissement (6). A l'entrée du four, une porte (2) limite les pertes de chaleur par convexion.

Sur la figure 2a on a représentée la forme métallique (8) appelée squelette qui supporte les verres (7). Le squelette est maintenu dans un cadre rigide (9) qui est lui-même porté par le chariot (10) sa fonction est de transporter les feuilles de verre d'une cellule à l'autre du four (1) pendant leur chauffage, leur bombage et leur refroidissement. Ce chariot se déplace en général grâce à des roues portées par des rails situés sur la sole du four, il est entraîné par des moyens mécaniques non représentés tels que des chaines ou des vérins par exemple.

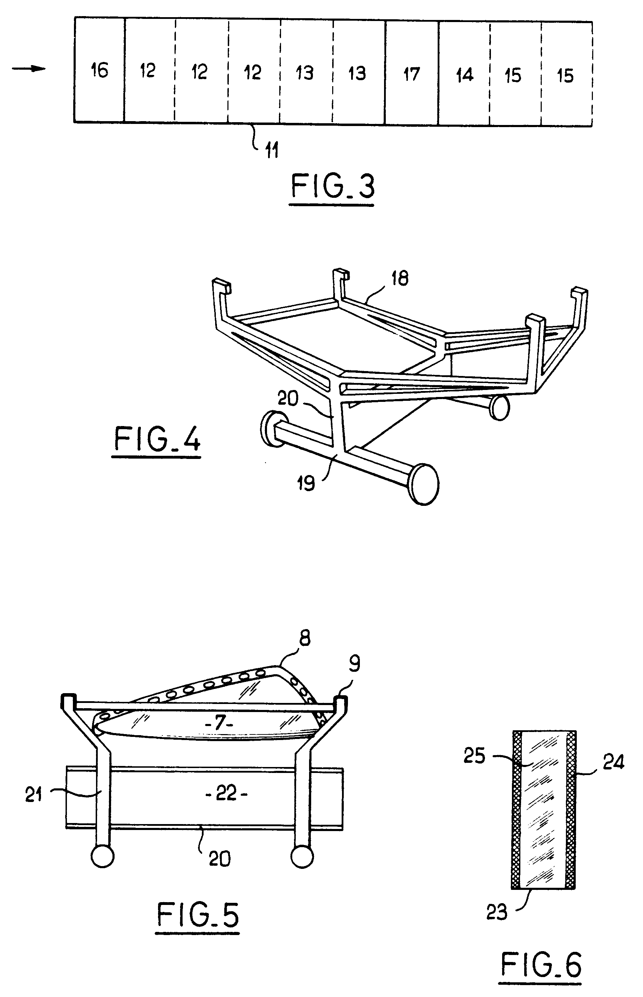

La figure 3 présente un four selon l'invention. Le four (11), choisi à titre d'exemple, comporte trois cellules de préchauffage (12) et deux cellules de bombage (13), il comporte aussi une cellule de soufflage (14) et deux cellules de refroidissement (15). Les cellules de refroidissement (15) permettent de ramener, sans risque de casse, le vitrage à une température où on peut le manipuler.

Mais dans une forme de réalisation de l'invention, le four (11) est également équipé de deux sas : tout d'abord une première cellule (16) en amont du préchauffage, cette cellule est équipée de deux portes quine sont jamais ouvertes simultanément, évitant ainsi les courants d'air froid dans la première cellule de préchauffage ; puis un deuxième sas (17), également équipé de deux portes qui, elles non plus, ne seront jamais ouvertes simultanément. Cette cellule sert de tampon entre la dernière cellule de bombage, là où le verre est le plus chaud et une cellule plus froide, par exemple, la cellule de soufflage (14) où l'on souffle un air relativement froid. Il s'agit ici aussi d'éviter les courants d'air froid qui pourraient perturber le régime thermique d'un four dont les inerties thermiques sont faibles.

La figure 4 montre une forme de réalisation d'un chariot selon l'invention, il comporte une partie inférieure (19) équipée de roues qui est destinée à rester en permanence en dehors du four. La partie supérieure (18) constitue un berceau et reste dans la partie chaude du four.

Sur la figure 5, un autre exemple de chariot est présenté ; il supporte le cadre (9) où est fixé le squelette (8) porteur du verre (7). Entre la partie basse (19) et la partie haute (18) du chariot une liaison rigide (20) aussi mince que possible mais d'une longueur pratique ment égale à celle des cellules du four sert à colmater le passage libre dans la paroi, elle est constituée de deux parties : des montants porteurs (21) et un remplissage isolant (22). Une forme de réalisation de la liaison rigide est représentée figure 6, on voit deux carters en tôle (23) en partie haute et basse qui enchassent deux plaques fibreuses denses (24) tandis que le centre est rempli de matériau isolant (25) par exemple de fibres céramiques en alumine de densité 100 kg/m$^3$.

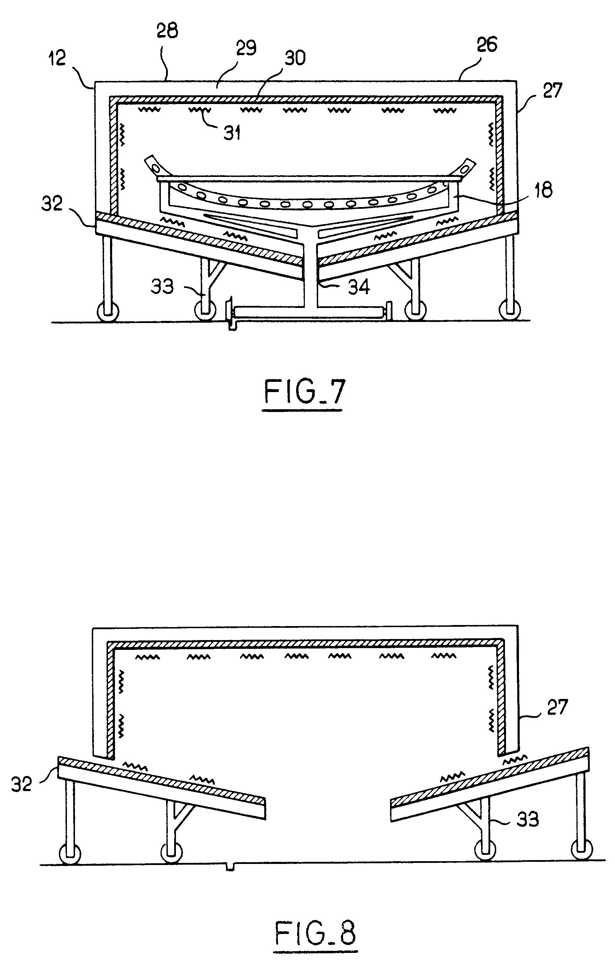

La figure 7 représente une vue en coupe d'un four selon l'invention. On y voit une cellule de préchauffage (12) dans laquelle circule le chariot (18). La voute (26) et les piédroits (27) sont fixés à une charpente non représentée. Ils ont une ossature métallique extérieure également non représentée à laquelle sont fixées les tôles (28) qui constituent la peau extérieure du four. La tôle supporte les matériaux isolants. Dans une forme particulière de réalisation, de l'extérieur vers l'intérieur, on trouve successivement 200 mm de laine de roche de masse spécifique 110 kg/m$^3$ (29) puis 50 mm de fibre céramique comme par exemple, du silicate d'aluminium, à 100 kg/m$^3$ (30). Ces isolants fibreux sont fixés aux parois par des moyens traditionnels : tiges et plaques métalliques.

La nature de ces parois, spécialement sur leur face intérieure a été choisie de manière que l'inertie ther-

EP 0 317 409 B1

mique "utile" réponde au problème posé. Par inertie thermique utile, on entend ici l'inertie thermique de l'épaisseur de la paroi qui participe effectivement aux échanges cycliques entre celle-ci et la masse plus froide qui pénètre périodiquement dans la cellule concernée.

Pour déterminer l'épaisseur en question, on a effectué des calculs selon la méthode de Schmidt telle qu'exposée dans l'ouvrage "Les fours industriels" de W. TRINKS (John Wiley and Sons, New York, traduction française : DUNOD, Paris 1957). On a pris l'exemple d'une paroi à une température homogène de 500°C plongée soudainement dans un environnement à 100°C et l'on a constaté que la température superficielle de la paroi se stabilise très vite (pour des durées sensiblement inférieures à la minute) et que l'épaisseur de matière concernée par les échanges thermiques pendant des durées de cet ordre restait limitée .

Pour une paroi analogue à celle décrite ci-dessus, l'épaisseur concernée par les échanges au bout d'une minute était de 36 mm (en prenant la conductivité thermique $\lambda$ = 0,13 watt par mètre et Kelvin et la chaleur volumique c = 0,29 watt-heure par kilogramme et Kelvin). En revanche pour une paroi en briques réfractaires d'un matériau silico-alumineux cette épaisseur n'est que de 19 mm ( $\lambda$ = 0,95 W/m.K, c = 0,27 W/kg.K). A titre indicatif, dans les deux cas précédents, les quantités de chaleur perdues par la paroi sont respectivement de 46 Watt-heure par mètre carré avec la paroi fibreuse et de 398 w-h/m$^2$ avec les briques réfractaires.

Il est donc apparu nécessaire de limiter l'épaisseur de la paroi prise en compte pour le calcul de la capacité calorifique à une valeur qui dépend des caractéristiques thermiques du matériau, en particulier de sa diffusité thermique où intervient le produit $\lambda$ c. La valeur en millimètres e = $10/\sqrt{\lambda\, c}$ est apparue comme la plus convenable pour définir l'épaisseur à prendre en considération. Pour l'exemple considéré, elle fournit pour la paroi fibreuse une épaisseur à utiliser pour le calcul de 50 mm et pour la paroi en briques réfractaires, de 19 mm précisément.

En poursuivant la description de la figure 7, on voit, fixées à la surface du matériau fibreux céramique (30) les résistances (31) qui sont directement exposées à l'air libre.

Dans l'exemple représenté, la sole (32), en deux parties, est mobile à l'aide de moyens de roulement (33). En position normale, la fente (34) est presque entièrement bouchée par la liaison rigide (20) qui relie la partie froide et la partie chaude du chariot. La sole est constituée des mêmes matériaux que les autres parois du four, elle comporte également des résistances.

La figure 8 représente le four avec sa sole (32). On voit qu'en roulant sur ses moyens de roulement (33), la sole -grâce à son inclinaison- s'écarte des piedroits du four (27) et que l'ouverture ainsi dégagée permet un accès facile à l'intérieur du four pour effectuer l'entretien et évacuer les fragments de verre en cas de casse.

Sur l'exemple comparatif qui va suivre, les avantages procurés par l'invention apparaîtront clairement.

Soit un four conventionnel du type de celui de la figure 1 (Four A).

Les cellules de préchauffage (3) de ce four ont les dimensions intérieures suivantes :
- voûte            : 2,10 m x 1,25 m
- piedroits        : 1,25 m x 0,90 m
- sole             : 2,10 m x 1,25 m

Les matériaux de la voûte et des piedroits seront supposés identiques à ceux du four selon l'invention : 50 mm de fibres céramiques à l'intérieur puis 200 mm de laine de roche. Quant à la sole, elle est constituée de briques d'un réfractaire silicoalumineux de 80 mm d'épaisseur sur lequel reposent deux rails en fer d'une section de 50 mm x 20 mm.

Le chariot qui circule dans le four A est en acier inoxydable, il a une masse de 50 kg.

Le four B, selon l'invention est analogue à la figure 3.

Ses cellules de préchauffage sont analogues à celle de la figure 7, leurs dimensions intérieures sont :
- longueur       : 1,25 m
- largeur         : 2,10 m
- hauteur        : 0,55 m

Le chariot qui circule dans le four B est constitué d'une partie supérieure de masse 25 kg.

Dans le four A, comme dans le four B, le support du squelette et le squelette en acier inoxydable ont ensemble une masse de 15 kg. On suppose également que le vitrage est le même et qu'il a une masse de 15 kg.

Le tableau suivant résume le calcul des capacités calorifiques "utiles" de chacun des fours :

| | $\lambda$ <br> W/m.K | c <br> Wh/kg.k | e <br> mm | S <br> m$^2$ | P <br> kg/m$^3$ | masse équiv. <br> kg | capac. calor. utile <br> Wh/K |
|---|---|---|---|---|---|---|---|
| FOUR A — voûte | 0,13 | 0,29 | 50 | 2,625 | 91 | 11,9 | 3,46 |
| piedroits | 0,13 | 0,29 | 50 | 2,25 | 91 | 10,2 | 2,97 |
| sole | 0,95 | 0,27 | 19 | 2,625 | 3.10$^3$ | 149,6 | 40,40 |
| rails | - | 0,17 | (2,5-10$^{-3}$ m$^3$) | | 7.7.10$^3$ | 19,3 | 3,27 |
| TOTAL FOUR A | - | - | - | - | - | - | 50,10 |
| FOUR B — voûte | 0,13 | 0,29 | 50 | 2,625 | 91 | 11,9 | 3,46 |
| piedroits | 0,13 | 0,29 | 50 | 1,375 | 91 | 6,3 | 1,81 |
| sole | 0,13 | 0,29 | 50 | 2,625 | 91 | 11,9 | 3,46 |
| TOTAL FOUR B | - | - | - | - | - | - | 8,74 |

En ce qui concerne l'équipage mobile dans chaque four, on a :

| | masse <br> kg | c <br> wh/kg.K | capac. calo. <br> wh/K |
|---|---|---|---|
| FOUR A — chariot | 50 | 0,17 | 8,50 |
| squelette | 15 | 0,17 | 2,55 |
| vitrage | 15 | 0,29 | 4,35 |
| TOTAL FOUR A | - | - | 15,40 |
| FOUR B — chariot | 25 | 0,17 | 4,25 |
| squelette | 15 | 0,17 | 2,55 |
| vitrage | 15 | 0,29 | 4,35 |
| TOTAL FOUR B | - | - | 11,15 |

On constate que le four B, conforme à l'invention, a une capacité calorifique "utile" de 8,74 Wh/K inférieure à celle de son équipage mobile qui est de 11,5 Wh/K. Au contraire, le four A, traditionnel a une capacité calorifique "utile" de 50,10 Wh/K qui est nettement supérieure à la capacité calorifique réelle de l'équipage mobile

6

- pourtant supérieure à celle du four B - qui est ici de 15,40 Wh/K.

En respectant les conditions prévues par l'invention comme dans le cas du four B - l'on pourra modifier les dimensions, donc la masse et la capacité calorifique, du vitrage sans que les conditions thermiques du four soient perturbées. En effet, supposons que le vitrage ait une masse de 20 kg (au lieu de 15 dans l'exemple ci-dessus) la capacité calorifique et donc la chaleur à fournir à la masse froide augmente de 5 x 0,29 = 1,45 wh/K, c'est-à-dire de 13 %. La température des résistances sera immédiatement modifiée et l'énergie électrique appelée pour leur chauffage croîtra immédiatement. Dans le four A au contraire, la masse réfractaire constitue un tampon qui empêche la régulation de réagir aussi vite et l'on constatera en général un effet de "pompage" de la régulation, et donc une instabilité des conditions thermiques qui pourra entraîner une température du vitrage à sa sortie des cellules de préchauffage incompatible avec un bombage correct.

## Revendications

1. Dispositif pour le bombage thermique de feuilles de verre par gravité comportant un équipage mobile supportant le verre qui le transporte dans un four, d'une cellule à une autre, le four comportant au moins une cellule de préchauffage et au moins une cellule de bombage et où, le chauffage est assuré par des résistances électriques, **caractérisé en ce que** la capacité calorifique des masses mobiles (7, 8, 9, 18, 19, 20, 21, 22) dans le four est supérieure à la somme des capacités calorifiques des matériaux (29, 30) constituant les parois internes de chaque cellule, le calcul étant effectué pour une épaisseur en millimètres "e" telle que :

$$e = \frac{10}{\sqrt{\lambda c}}$$

où $\lambda$ est la conductivité thermique en W/m.K
et c est la chaleur massique en Wh/kg.K

2. Dispositif selon la revendication 1, **caractérisé en ce que** les parois internes (30) du four sont constituées de matériaux isolants fibreux à l'exclusion de toute masse autre que celles servant à des fonctions mécaniques ou électriques.

3. Dispositif selon la revendication 2, **caractérisé en ce que** la sole (32) du four est revêtue intérieurement d'un matériau fibreux. .

4. Dispositif selon la revendication 1, **caractérisé en ce que** les résistances (31) sont placées sur les parois internes (30) du four (11) et **en ce que** leur température est maintenue constante par la régulation de leur alimentation.

5. Dispositif selon la revendication 1, **caractérisé en ce que** les échanges thermiques avec l'extérieur sont limités par une cellule tampon (16) formant sas entre la première cellule de préchauffage (12) et l'extérieur du four.

6. Dispositif selon la revendication 1, **caractérisé en ce qu'**il comporte une cellule tampon (17) formant sas entre la dernière cellule de bombage (13) et la cellule suivante (14), plus froide.

7. Dispositif pour le bombage thermique de feuilles de verre selon l'une des revendications précédentes **caractérisé en ce que** les équipages mobiles supportant les feuilles de verre sont des chariots constitués de deux parties, un berceau (18) qui supporte le verre et se déplace dans la partie chaude du four et des moyens de roulement liés mécaniquement au berceau et qui restent en permanence à l'extérieur du four.

8. Dispositif selon la revendication 7, où les moyens de roulement (19) sont situés en-dessous du berceau supportant le verre.

9. Dispositif selon la revendication 8, **caractérisé en ce que** les deux parties des chariots sont liées mécaniquement par une liaison rigide (20) dont l'épaisseur selon une direction perpendiculaire à la direction de progression des chariots est limitée à celle nécessaire à assurer la rigidité de l'équipage mobile et en ce que ladite liaison rigide traverse la sole (32) du four où une fente longitudinale (34) permet son déplacement.

10. Dispositif selon la revendication 9, **caractérisé en ce que** l'étanchéité de la fente (34) est assurée par des moyens liés au chariot.

11. Dispositif selon la revendication 9, **caractérisé en ce que** la liaison rigide (20) a une longueur sensiblement égale à la longueur de chaque zone et une épaisseur à peine inférieure à celle de la fente (34) où elle se déplace.

12. Dispositif selon la revendication 11, **caractérisé en ce que** la liaison rigide (20) est constituée de montants (21) qui assurent la rigidité et comporte également des éléments de remplissage (22) en matériaux isolants disposés de manière à occuper tout l'espace de la fente.

13. Dispositif selon la revendication 9, **caractérisé en ce qu'**au moins une des deux parties de la sole (32) situées de part et d'autre de la fente (34) est équipée de moyens de déplacement (33) qui autorisent un mouvement dans un plan sensiblement horizontal.

14. Dispositif selon la revendication 9, **caractérisé en ce que** les deux parties de la sole (32) situées de part et d'autre de la fente (34) ont leur face interne inclinée par rapport à l'horizontale, les côtés les plus bas avoisinant ladite fente (34).

## Patentansprüche

1. Vorrichtung zum thermischen Biegen von Glasscheiben durch Schwerkraft mit einem beweglichen und das Glas tragenden Aufbau, mit dem die Scheiben in einem Ofen von einer Station zur anderen transportiert werden, wobei der Ofen mindestens eine Vorwärmstation und mindestens eine Biegestation enthält und die Erwärmung durch Widerstandbeizelemente erfolgt, dadurch gekennzeichnet, daß die Wärmekapazität der beweglichen Massen (7,8,9,18,19,20,21,22) im Ofen höher ist als die Summe der Wärmekapazitäten der Werkstoffe (29,30), die die Innenwände jeder Station bilden, wobei die Berechnung für eine in Millimetern angegebene Dicke "e", nämlich:

$$e = \frac{10}{\sqrt{\lambda c}}$$

durchgeführt wird,
wobei $\lambda$ die spezifische Wärmeleitfähigkeit in W/m.K
und c die spezifische Wärme in Wh/kg.K ist.

2. Vorrichtung nach Anspruch 1, dadurch gekennzeichnet, daß die Innenwände (30) des Ofens aus Isolierfaserstoffen gebildet sind und keine massige Elemente enthalten ausser Teile, die für mechanische oder elektrische Funktionen herangezogen sind.

3. Vorrichtung nach Anspruch 2, dadurch gekennzeichnet, daß die Ofensohle (32) innen mit Fasermaterial ausgekleidet ist.

4. Vorrichtung nach Anspruch 1, dadurch gekennzeichnet, daß die Widerstandsheizelemente (31) auf den Innenwänden (30) des Ofens (11) angeordnet sind und daß ihre Temperatur durch Regelung ihrer Versorgung konstant gehalten wird.

5. Vorrichtung nach Anspruch 1, dadurch gekennzeichnet, daß der Wärmeaustausch mit dem Äußeren durch eine Pufferstation (16) begrenzt wird, die eine Schleuse zwischen der ersten Vorwärmstation (12) und dem Äußeren des Ofens bildet.

6. Vorrichtung nach Anspruch 1, dadurch gekennzeichnet, daß sie eine Pufferstation (17) beinhaltet, die eine Schleuse zwischen der letzten Biegestation (13) und der folgenden kälteren Station (14) bildet.

7. Vorrichtung zum thermischen Biegen von Glasscheiben nach einem der vorhergehenden Ansprüche, dadurch gekennzeichnet, daß die beweglichen, die Glasscheiben tragenden Aufbauten Wagen sind, die aus zwei Teilen bestehen, nämlich einem Trägerteil (18), der das Glas trägt und sich im warmen Teil des Ofens bewegt und einer Rolleinrichtung, die mechanisch mit dem Trägerteil verbunden ist und ständig außerhalb des Ofens bleibt.

8. Vorrichtung nach Anspruch 7, bei der die Rolleinrichtung (19) unter dem das Glas tragenden Trägerteil angeordnet ist.

9. Vorrichtung nach Anspruch 8, dadurch gekennzeichnet, daß die zwei Teile der Wagen durch eine starre Verbindung (20) mechanisch verbunden sind, deren Dicke in zur Fortbewegungsrichtung der Wagen senkrechter Richtung auf die zur Gewährleistung der Steifheit des beweglichen Aufbaus erforderliche Dicke begrenzt ist und daß die starre Verbindung sich durch die Ofensohle (32) bewegt, wo ein Längsspalt (34) deren Verschiebung ermöglicht.

10. Vorrichtung nach Anspruch 9, dadurch gekennzeichnet, daß die Dichtheit des Spalts (34) durch eine mit dem Wagen verbundene Einrichtung gewährleistet ist.

11. Vorrichtung nach Anspruch 9, dadurch gekennzeichnet, daß die starre Verbindung (20) eine Länge hat, die im wesentlichen der Länge jeder Zone entspricht und eine Dicke, die wenig geringer ist als die des Spalts (34), in dem sie sich fortbewegt.

12. Vorrichtung nach Anspruch 11 dadurch gekennzeichnet, daß die starre Verbindung (20) aus Ständern (21) besteht, die die Steifheit gewährleisten und auch Füllelemente (22) aus Isolierstoffen enthält, die so angeordnet sind, daß sie den ganzen Spalt ausfüllen.

13. Vorrichtung nach Anspruch 9, dadurch gekennzeichnet, daß mindestens einer der beiden teile der Sohle (32), die beiderseits des Spalts (34) angeordnet sind, mit einer Bewegung in einer im wesentlichen horizontalen Ebene gestattet.

14. Vorrichtung nach Anspruch 9, dadurch gekennzeichnet, daß die Innenfläche der zwei Teile der Sohle (32), die beiderseits des Spalts (34) angeordnet sind, in bezug auf die Horizontale geneigt ist, wobei die untersten Seiten an den Spalt (34) angrenzen.

## Claims

1. Apparatus for the thermal bending of glass sheets by gravity comprising a moving means supporting the glass and transporting it into a furnace from one cell to the other, the furnace having at least one preheating cell and at least on bending cell and where heating is ensured by electrical resistors, characterized in that the heat capacity of the mobile masses (7,8,9,18,19,20,21,22) in the furnace exceeds the sum of the heat capacities of the materials (29,30) forming the inner walls of each cell, the calculation being made for a thickness in millimetres e such that:

$$e = \frac{10}{\sqrt{\lambda c}}$$

in which $\lambda$ is the thermal conductivity in W/m.K
and c is the specific heat in Wh/kg.K.

2. Apparatus according to claim 1, characterized in that the inner walls (30) of the furnace are made from fibrous insulating materials, with the exception of any bulky materials other than those having mechanical or electrical functions.

3. Apparatus according to claim 2, characterized in that the furnace hearth (32) is internally coated with a fibrous material.

4. Apparatus according to claim 1, characterized in that the resistors (31) are placed on the inner walls (30) of the furnace (11) and in that their temperature is kept constant by regulating their power supply.

5. Apparatus according to claim 1, characterized in that the heat exchanges with the exterior are limited by a buffer cell (16) forming a lock between the first preheating cell (12) and the exterior of the furnace.

6. Apparatus to claim 1, characterized in that it incorporates a buffer cell (17) forming a lock between the final cambering cell (13) and the following, colder cell (14).

7. Apparatus for the thermal bending of glass sheets according to one of the preceding claims, characterized in that the moving means supporting the glass sheets are carriages constituted by two parts, a cradle (18) supporting the glass and moving in the hot part of the furnace and rolling means mechanically linked with the cradle and which permanently remain outside the furnace.

8. Apparatus according to claim 7, where the rolling means (19) are located below the cradle supporting the glass.

9. Apparatus according to claim 8, characterized in that the two parts of the carriages are mechanically linked by a rigid attachment (20), whose thickness in a direction perpendicular to the carriage advance direction is limited to that necessary for ensuring the rigidity of the moving means and in that said rigid attachment passes through the furnace hearth (32), where its displacement is permitted by a longitudinal slot (34).

10. Apparatus according to claim 9, characterized in that the tightness of the slot (34) is ensured by means connected to the carriage.

11. Apparatus according to claim 9, characterized in that the rigid attachment (20) has a length substantially equal to the length of each zone and a thickness scarcely less than that of the slot (34) in which it moves.

12. Apparatus according to claim 11, characterized in that the rigid attachment (20) is constituted by posts (21) ensuring the rigidity and by insulating material filling members (22) positioned so as to occupy the entire space of the slot.

13. Apparatus according to claim 9, characterized in that at least one of the two parts of the hearth (32) located on either side of the slot (34) is equipped with displacement means (33) allowing a movement in a substantially horizontal plane.

14. Apparatus according to claim 9, characterized in that the two parts of the hearth (32) located on either side of the slot (34) have their inner face inclined relative to the horizontal, the lowest sides being adjacent to the said slot (34).

| 3 | 3 | 3 | 4 | 4 | 5 | 6 | 6 |

2

1

## FIG.1

## FIG.2a

7

8

9

## FIG.2b

7

9

8

10

10

| 16 | 12 | 12 | 12 | 13 | 13 | 17 | 14 | 15 | 15 |
|----|----|----|----|----|----|----|----|----|----|

11

## FIG.3

## FIG.4

## FIG.5

## FIG.6

FIG_7

FIG_8